# EUROPÄISCHE PATENTSCHRIFT

(11) **EP 3 838 575 B1**
(45) Veröffentlichungstag und Bekanntmachung des Hinweises auf die Patenterteilung: **06.09.2023**
(21) Anmeldenummer: 20209397.7
(22) Anmeldetag: 24.11.2020
(51) Int. Cl.: B29D 35/14, A43B 1/00

(54) **VERFAHREN ZUM HERSTELLEN EINER LAUFSOHLE SOWIE SPRITZ- ODER GIESSWERKZEUG**
METHOD OF MANUFACTURING AN INSOLE AND INJECTION OR CASTING MOULD
PROCÉDÉ DE FABRICATION D'UNE SEMELLE AINSI QU'OUTIL D'INJECTION OU DE COULÉE

(30) Priorität: 20.12.2019 DE 102019135525
(43) Veröffentlichungstag der Anmeldung: 23.06.2021
(73) Patentinhaber: Engelbert Strauss GmbH & Co. KG, 63599 Biebergemünd (DE)
(72) Erfinder: Muus, Klaus-Michael, 63599 Biebergemünd (DE)
(74) Vertreter: Stoffregen, Hans-Herbert

(56) Entgegenhaltungen:
- EP-A1- 3 424 695
- KR-A- 20150 026 229
- US-A1- 2011 277 923
- US-A1- 2012 198 730

## Beschreibung

Die Erfindung bezieht sich auf ein Verfahren zum Herstellen einer transparenten Laufsohle im Spritz- oder Gießverfahren, wobei Kunststoff in eine von zumindest einem ersten Werkzeugteil, wie Oberstempel oder Verdränger, und einem zweiten Werkzeugteil, wie Unter- oder Bodenstempel, begrenzte Kavität eingebracht wird.

Gegenstand ist auch ein Spritz- oder Gießwerkzeug bestimmt zur Herstellung einer transparenten Laufsohle, umfassend ein erstes Werkzeugteil wie einen Oberstempel oder Verdränger, und ein zweites Werkzeugteil wie einen Unter- oder Bodenstempel, die relativ zueinander verstellbar sind und eine Kavität begrenzen.

Insbesondere für den Sport- oder Freizeitbereich bestimmte Schuhe weisen häufig ein Dekor auf, das auch auf der Laufsohle aufgebracht sein kann. So ist der WO 2013/098391 A1 eine Absatzsohle zu entnehmen, die eine Ausnehmung aufweist, in die ein Logoträger verliersicher anordbar ist.

Ein Sportschuh mit einer Laufsohle, die ein Logo aufweist, ist aus der US 4,712,314 A bekannt. Hierzu weist die Laufsohle eine Aussparung auf, in die ein transparenter Einsatz eingebracht ist.

Nachteil dieser Gestaltung ist, dass das Dekor durch Abrieb verblassen oder vollständig verschwinden kann.

Ein Sportschuh mit einer Dekoration wird in der EP 1 574 144 B1 beschrieben. Dabei befindet sich die Dekoration im Manschettenteil des Sportschuhs, der aus zwei Schichten besteht, zwischen denen eine Verzierung angeordnet ist.

Aus der US 2011/0277251 A1 ist eine Schuhsohle mit transparenter Außensohle bekannt, die innenflächig einen von außen sichtbaren Druck aufweist.

Um eine Sohle mit einem Farbmuster zu versehen, sieht die EP 1 403 032 A1 vor, dass ein Muster auf eine Membran gedruckt wird, die sodann oberflächenbehandelt wird. Anschließend wird die Membrane in Abschnitte unterteilt, die in einer Form fixiert werden, in der die Sohle hergestellt wird.

Der US 2012/0198730 A1 ist ein Verfahren zur Herstellung eines Schaftes eines Schuhs zu entnehmen, der ein Skelett mit Durchbrüchen aufweist, die von einer Folie abgedeckt sind. Zur Herstellung wird eine Folie mittels Vakuum in einem Unterstempel eines Spritzwerkzeuges fixiert, um sodann auf die Folie das Skelett zu spritzen.

Der EP 2 042 291 A1 ist ein Verfahren zur Herstellung eines Formteils zu entnehmen, bei dem eine Lederschicht mit ihrer Ansichtsseite auf einer Formwand eines Formwerkzeuges aufgelegt und ein Kunststoffmaterial zur Bildung einer Kunststoffschicht auf der Innenseite der Lederschicht gespritzt wird. Dabei kann die Lederschicht mittels Unterdruck fixiert werden.

Die US 2011/0277923 A1 bezieht auf ein Verfahren zur Herstellung einer Sohle die eine äußere Stabilisierungssohle und ggf. eine zwischen dieser und dem Sohlenmaterial verlaufende mit einer Grafik versehene weitere Folie aufweist.

Die Herstellung einer Sohle aus Polyurethan wird in der EP 3 424 695 A1 beschrieben.

Dabei wird eine aus Kunststoffmaterial bestehende Folie benutzt, die sich über die herzustellende Sohle hinaus erstreckt.

Der vorliegenden Erfindung liegt die Aufgabe zugrunde, ein Verfahren und ein Spritz- oder Gießwerkzeug der eingangs genannten Art so weiterzubilden, dass mit konstruktiv einfachen Maßnahmen eine Personalisierung einer Laufsohle erfolgen kann.

Die Erfindung ist im beigefügten Anspruchssatz beschrieben.

Erfindungsgemäß besteht die Möglichkeit, in gewünschten Bereichen eine Personalisierung der Sohle vorzunehmen, d.h. gestalterische Elemente sichtbar zu machen, ohne dass die Laufsohle selbst Veränderungen bedarf.

Gleichzeitig ergibt sich der Vorteil, dass auch bei stark benutzter, insbesondere verschlissener Laufsohle, die Personalisierung unbeschädigt und damit sichtbar bleibt, da diese sich in bzw. auf der Seite der Sohle befindet, die der Lauffläche abgewandt ist, also der Innenseite der Laufsohle.

Unabhängig von der flächigen Erstreckung des Flachmaterials ist ein eindeutiges und sicheres Fixieren möglich, ohne dass beim Spritzen bzw. Gießen des Kunststoffs, aus dem die Laufsohle hergestellt wird, eine Lageveränderung erfolgt.

Auch ist es nicht erforderlich, dass gesonderte Fixiermittel außerhalb der Kavität vorgesehen sind, um das Flachmaterial zu halten.

Es kann das Flachmaterial flächenmäßig optimal ausgenutzt werden.

Bei dem Flachmaterial handelt es sich insbesondere um eine Kunststofffolie oder ein flächiges Textilgewebe.

Erwähntermaßen zeichnet sich die Erfindung insbesondere dadurch aus, dass das Flachelement eine Flächenerstreckung derart aufweist, dass ausschließlich ein Teilbereich der die Kavität begrenzenden Fläche des ersten Werkzeugteils abgedeckt wird.

Die das Flachelement haltenden Saugöffnungen durchsetzen ausschließlich die Fläche, die die Kavität begrenzt.

Somit kann eine Individualisierung der Laufsohle im gewünschten Umfang erfolgen, ohne dass es erforderlich ist, dass das Flachmaterial sich über die gesamte Fläche der Laufsohle oder außerhalb von dieser erstreckt, um z. B. das Flachmaterial zu fixieren.

Das erste Werkzeugteil begrenzt innerseits die Innenseite der transparenten Laufsohle, also die Seite, die dem Schuhschaft zugewandt ist, und auf der eine Zwischensohle, sofern der herzustellende Schuh eine solche aufweist, oder eine Innensohle verläuft.

Erfindungsgemäß ist das erste Werkzeugteil, wie der Oberstempel bzw. Verdränger, derart ausgestaltet, dass in dessen die Kavität begrenzender Fläche Saugöffnungen vorhanden sind, die an eine oder mehrere Unterdruckquellen anschließbar sind, so dass dann, wenn gewünschte Saugöffnungen mit Unterdruck beaufschlagt sind, Flachmaterial fixiert werden kann.

Die Saugöffnungen können kavitätsseitig ein Filter oder gleichwirkendes Element aufweisen bzw. in dieses eingesetzt sein, um auszuschließen, dass Kunststoffmaterial eindringt.

Es besteht die Möglichkeit, dass in dem kavitätsfernen Teil mehrere Kanäle bzw. Nuten ausgebildet sind, die unabhängig voneinander mit Unterdruck beaufschlagbar sind.

Des Weiteren besteht die Möglichkeit, dass die Saugöffnungen in Gruppen unterteilt sind, die unabhängig voneinander mit der zumindest einen Unterdruckquelle verbindbar sind. Dabei ist insbesondere vorgesehen, dass eine erste Gruppe von ersten Saugöffnungen auf einer ersten Linie angeordnet ist, die umlaufend beabstandet zum Rand der Fläche verlaufen, die die Kavität begrenzt.

Ferner kann eine zweite Gruppe von zweiten Saugöffnungen entlang einer zweiten Linie angeordnet sein, die umlaufend beabstandet zum Rand und innerhalb der ersten Linie verlaufen.

Des Weiteren sieht eine Weiterbildung der Erfindung vor, dass in herzustellenden Fersenbereich der Sohle begrenzender Fläche des ersten Werkzeugteils eine dritte Gruppe von dritten Saugöffnungen angeordnet ist, die vorzugsweise im Mittenbereich des herzustellenden Fersenbereichs der Laufsohle verlaufen.

Ferner besteht die Möglichkeit, dass Abstand von aufeinanderfolgenden ersten Saugöffnungen geringer als Abstand von aufeinanderfolgenden zweiten Saugöffnungen ist. Auch kann vorgesehen sein, dass Durchmesser D1 der ersten Saugöffnung kleiner als Durchmesser D2 der zweiten Sauföffnung ist, insbesondere 5D1 ≤ D2 ≤ 15 D1.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
Fig. 1: eine Prinzipdarstellung eines ersten Werkzeugteils gemäß der beanspruchten Erfindung,
Fig. 2: eine eine Kavität begrenzende Fläche des ersten Werkzeugteils gemäß der beanspruchten Erfindung,
Fig. 3: eine Prinzipdarstellung eines Teils der ersten Werkzeugteils gemäß der beanspruchten Erfindung,
Fig. 4 bis 9: Prinzipdarstellungen des Verfahrensablaufs zur Herstellung einer transparenten Sohle gemäß der beanspruchten Erfindung, und
Fig. 10: einen Längsschnitt durch einen Schuh.

Anhand der Figuren soll die Erfindung näher erläutert werden, aufgrund der eine Personalisierung einer transparenten Laufsohle ermöglicht wird.

Personalisierung heißt, dass von der Außenseite der Laufsohle Zeichen, Dekore oder sonstige Kennzeichnungen wahrgenommen werden können, ohne dass solche auf der Außenfläche der Außensohle an- bzw. aufgebracht sind. Dabei wird auch die Möglichkeit eröffnet, gezielt ausschließlich in Teilbereichen der Laufsohle entsprechende Darstellungen vorzunehmen, ohne dass der Träger dieser die gesamte Innenseite der Laufsohle abdecken muss.

Mit anderen Worten wird durch eine Abnutzung der Laufsohle die Personalisierung nicht beeinträchtigt, da diese sich in oder an der Innenseite der Laufsohle befindet, die schuhschaftseitig verläuft und gegebenenfalls von einer Zwischensohle abgedeckt ist.

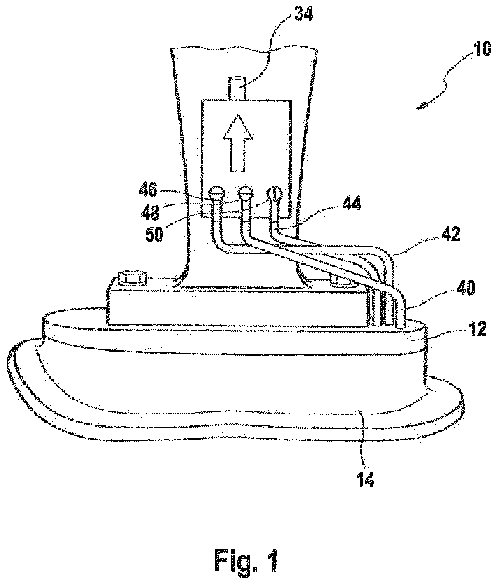

In Fig. 1 ist ein erstes Werkzeugteil 10 eines Spritz- oder Gießwerkzeuges dargestellt, das auch als Oberstempel oder Verdränger- oder Blindleiste bezeichnet werden kann. Nachstehend wird das erste Werkzeugteil als Oberstempel bezeichnet, ohne dass hierdurch eine Einschränkung der erfindungsgemäßen Lehre erfolgt.

Der Oberstempel 10 besteht aus einem oberen Teil 12 und einem unteren Teil 14, das in nachstehend beschriebener Weise eine Kavität 18 mit einer Fläche 16 begrenzt, die ihrerseits von einem zweiten Werkzeugteil 20 - auch Unter- oder Bodenstempel genannt - ergänzt wird. Das zweite Werkzeugteil 20 wird nachstehend als Unterstempel bezeichnet, ohne gleichfalls die Erfindung einzuschränken.

Ober- und Unterstempel 10, 20 bilden ein Werkzeug einer Kunststoffspritz- oder Gießanlage, mit der transparente Laufsohlen hergestellt werden. Als Materialien hierfür werden Kunststoffe, insbesondere thermoplastisches Polyurethan (TPU), benutzt.

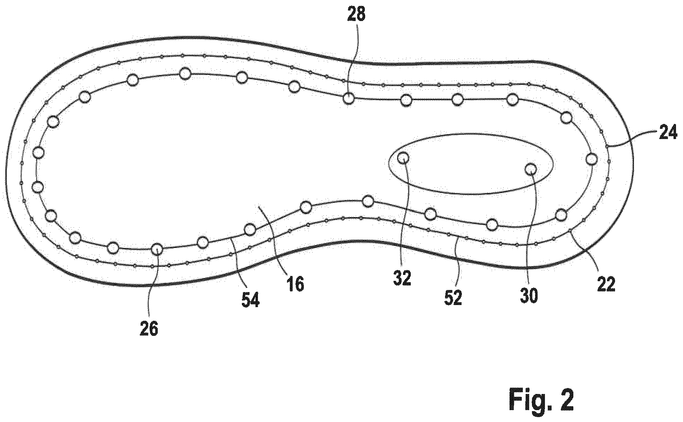

Die die Kavität 18 begrenzende Fläche 16 des Oberstempels 10 weist entsprechend der Darstellung der Fig. 2 eine Vielzahl von Öffnungen auf, von denen erste Öffnungen beispielhaft mit den Bezugszeichen 22, 24, zweite Öffnungen beispielhaft mit den Bezugszeichen 26, 28 und dritte Öffnungen mit den Bezugszeichen 30, 32 gekennzeichnet sind. Die entsprechenden Öffnungen 22, 24, 26, 28, 30, 32 sind mit einer nicht dargestellten Unterdruckquelle (Anschluss 33) verbunden und bilden somit Saugöffnungen, über die ein Flachmaterial, insbesondere eine Kunststofffolie oder ein Textilgewebe, auf der Fläche 16 fixiert werden kann.

Um die Öffnungen 22, 24, 26, 28, 30, 32 mit Unterdruck beaufschlagen zu können, sind in dem oberen Teil 12 des Oberstempels 10 Kanäle 34, 36, 38 oder Nuten ausgebildet, die ihrerseits mit Unterdruckanschlüssen 40, 42, 44 verbindbar sind, die über prinzipiell angedeutete Ventile 46, 48, 50 über den Anschluss 33 mit der Unterdruckquelle verbindbar sind.

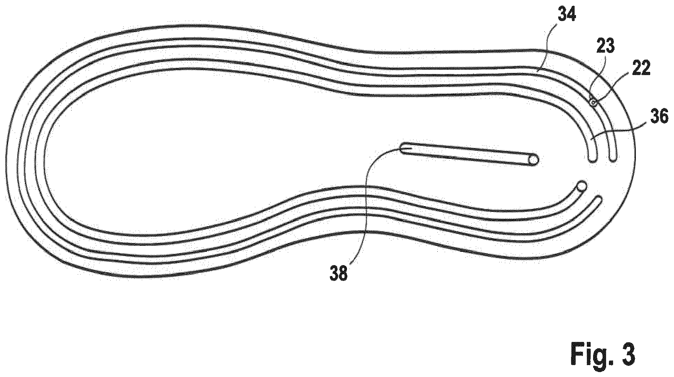

Wie ein Vergleich der Fig. 2 und 3 verdeutlicht, ist der äußere Kanal 34 über Durchgangsöffnungen mit den flächenseitig, also kavitätsseitig mündenden Öffnungen 22, 24, der Kanal 36 bzw. die Nut mit den Öffnungen 26, 28 und der Kanal 38 bzw. die Nut mit den Öffnungen 30, 32 verbunden.

Eine der Durchgangsöffnungen, die mit dem Anschluss 33 verbunden ist, ist in Fig. 3 eingezeichnet (Bezugszeichen 23). Die Durchgangsöffnung 23 geht in die eine Saugöffnung bildende Öffnung 22 über.

Folglich liegt an den ersten bzw. zweiten bzw. dritten Öffnungen 22, 24 bzw. 26, 28 bzw. 30, 32 dann Unterdruck an, wenn der entsprechende Kanal 34 bzw. 36 bzw. 38 über das Ventil 46 bzw. 48 bzw. 50 mit der Unterdruckquelle verbunden ist.

Auf den Öffnungen 22, 24, 26, 28, 30, 32 kann sodann ein Flachmaterial in Form z.B. einer Folie oder eines Textilgewebes gelegt werden, durch die die gewünschte Personalisierung erfolgen soll. Hierzu wird auf das Flachmaterial durch insbesondere Drucken die eine Personalisierung bzw. Individualisierung ermöglichende Darstellung aufgebracht.

Die Ansaugöffnungen bildenden ersten Öffnungen 22, 24 sind auf einer ersten Linie 52 angeordnet, die umlaufend und beabstandet zum Rand der Fläche 16 und damit zum Rand der herzustellenden Laufsohle verläuft.

Die zweiten Öffnungen 26, 28 sind auf einer zweiten Linie 54 angeordnet, die innerhalb der ersten Linie 52 und vorzugsweise parallel oder weitgehend parallel zu dieser verläuft.

Die Ansaugöffnungen bildenden dritten Öffnungen 30, 32 sind in dem Bereich der Fläche 16 vorhanden, in der die Ferse der Laufsohle hergestellt werden soll.

Die ersten Öffnungen 22, 24 können einen Durchmesser von z.B. 0,25 mm bis 0,35 mm, insbesondere von 0,3 mm, aufweisen. Die zweiten Öffnungen 26, 28 und gegebenenfalls die dritten Öffnungen 30, 32 weisen demgegenüber größere Durchmesser auf, insbesondere im Bereich zwischen 2,5 mm und 3,5 mm, insbesondere von 3 mm.

Die den Öffnungen 22, 26, 28, 30, 32 zugeordneten Kanäle 34, 36, 38 oder Nuten können eine Breite von z.B. 4 mm bis 6 mm und eine Tiefe gleicher Größenordnung aufweisen, ohne dass durch die angegebenen Zahlenwerte eine Beschränkung der erfindungsgemäßen Lehre folgt.

Unabhängig hiervon sollte der Abstand zwischen den zweiten Öffnungen 26, 28 größer als der der ersten Öffnungen 22, 24 sein.

Damit beim Herstellen der Laufsohle Kunststoff in die Öffnungen 22, 24, 26, 28, 30, 32 nicht eindringen kann, d.h., in die Öffnungen, die von dem Flachmaterial wie Kunststofffolie oder Textilgewebe nicht abgedeckt sind, weisen die Öffnungen 22, 24, 26, 28, 30, 32 austrittsseitig, also kavittätsseitig ein Filter, insbesondere aus Messing, auf.

Wird eine Kunststofffolie benutzt, so sollte diese insbesondere aus dem gleichen Material bestehen, aus dem die Laufsohle hergestellt wird, um eine innige Verbindung sicherzustellen.

Wird ein Textilgewebe benutzt, so wird quasi durch Verkrallen des aushärtenden Kunststoffmaterials in der Struktur des Gewebes ein sicheres Fixieren sichergestellt.

Nach Herstellen der Laufsohle wird in gewohnter Weise die Zwischensohle in Spritztechnik hergestellt und mit der Laufsohle sowie dem Flachmaterial, also der Kunststofffolie bzw. dem Textilgewebe verbunden.

Sind in den zeichnerischen Darstellungen die Saugöffnungen bildenden ersten und zweiten Öffnungen 22, 24, 26, 28 jeweils über einen einzigen Kanal, also den Kanal 34 bzw. 36 verbunden, so können auch Gruppen der ersten bzw. zweiten die Saugöffnungen bildenden Öffnungen 22, 24, 26, 28 mit getrennten in dem oberen Teil 12 des Oberstempels 10 vorhandenen Kanälen verbunden werden, so dass nicht sämtliche der ersten bzw. zweiten Öffnungen 22, 24, 26, 28 gleichzeitig mit Unterdruck beaufschlagt sein müssen. Auch hierdurch wird deutlich, dass die die Personalisierung bzw. Individualisierung ermöglichende Folie bzw. das Textilgewebe die Fläche 16 des Oberstempels 10, die die Kavität 18 begrenzt, nur bereichsweise abdecken muss.

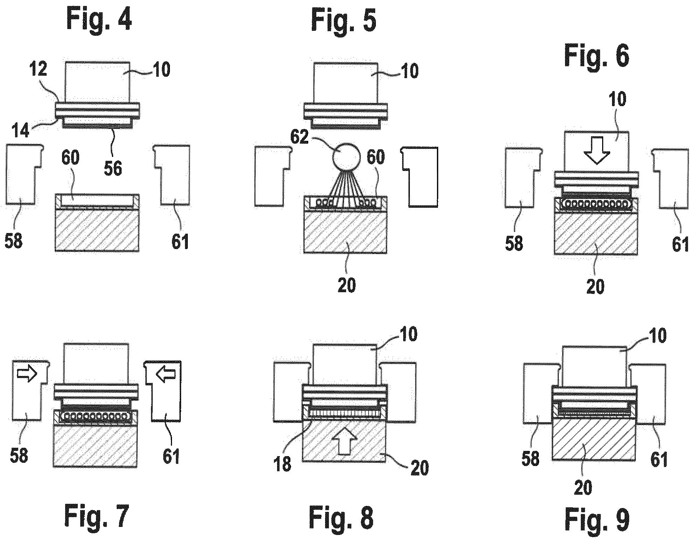

Das Verfahren zur Herstellung der Sohle mit dem Flachmaterial, d.h., der z.B. TPU-Folie oder dem Textilgewebe, soll anhand der Fig. 4 bis 9 verdeutlicht werden.

In Fig. 4 sind Ober- und Unterstempel 10, 20 beabstandet zueinander angeordnet. Entsprechend der erfindungsgemäßen Lehre ist auf der Fläche 16 eine Folie 56 über die Saugöffnungen fixiert, beispielhaft über sämtliche Öffnungen 22, 24, 26, 28, 30, 32.

Die Fläche 16 begrenzt somit die Innenseite oder -fläche der herzustellenden Laufsohle.

Neben dem Oberstempel 10 und dem Unterstempel 20 weist das Gießwerkzeug des weiteren Formrahmenteile 58, 61 auf.

Zum Fixieren der Folie 56 kann gegebenenfalls der Oberstempel 10 verschwenkt werden, um ein einfaches Positionieren und Fixieren der Folie 56 zu ermöglichen.

So kann beim Aufbringen der Folie 56 der Oberstempel um 180° derart verschwenkt sein, dass die Fläche 16 horizontal verläuft und von oben frei zugänglich ist.

Nach Ausrichten des Oberstempels 10 auf den Unterstempel 20 wird sodann in das Formnest 60 des Unterstempels 20 über ein Spritzgießaggregat 62 das Material, aus dem die Laufsohle hergestellt wird, gefüllt, also insbesondere mit TPU (thermoplastischem Polyurethan) (Fig. 5).

Sodann wird der Oberstempel 10 in Richtung des Unterstempels 20 verstellt und die Formrahmenteile 58, 61 werden herangefahren (Fig. 6, 7).

Sodann wird entsprechend der Fig. 8 der Unterstempel 20 in Richtung des Oberstempels 10 verstellt, um die in der von dem Oberstempel 10 und dem Unterstempel 20 begrenzten Kavität 18 vorhandene Kunststoffmasse zu verpressen (Fig. 9).

Anschließend werden die Formrahmenteile 58, 61 auseinandergefahren und Unter- und Oberstempel 10, 20 in ihre Ausgangspositionen zurückbewegt, um die Laufsohle mit der die Individualisierung bzw. Personalisierung ermöglichende TPU-Folie aus dem Werkzeug zu entfernen.

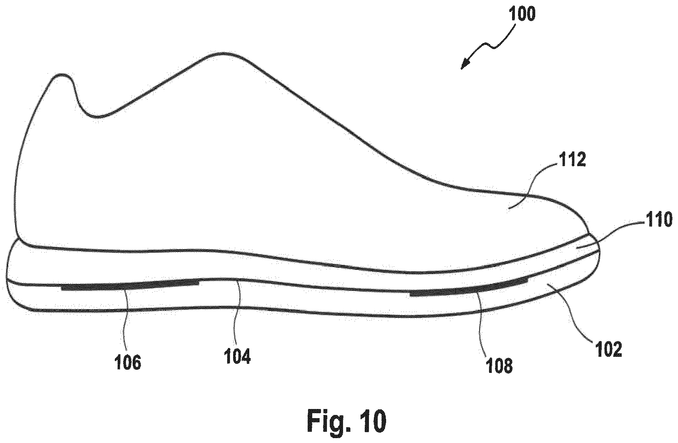

In Fig. 10 ist rein prinzipiell ein Längsschnitt durch einen Schuh 100 dargestellt, dessen Laufsohle 102 in gewünschten Bereichen eine Personalisierung aufweist, die sich in der Darstellung im Bereich der Ferse und dem Fußballen befinden. Entsprechend der erfindungsgemäßen Lehre werden vor dem Herstellen der Laufsohle 102 entsprechende die Personalisierung bewirkende Flachmaterialien 106, 108, wie Folien oder Textilgewebe, in dem Spritzgießwerkzeug mittels Unterdruck fixiert, um sodann die Sohle herzustellen. Im Ausführungsbeispiel wird nach Herstellen der Laufsohle 102, die auf der Innenseite die quasi Intarsien bildenden und die Personalisierung bewirkenden Folien 106, 108 aufweist, eine Zwischensohle 110 befestigt, von der der Schuhschaft 112 ausgeht.

Aufgrund der erfindungsgemäßen Lehre kann auch bei starker Abnutzung der Laufsohle 102 die durch die Flachmaterialien 106, 108, wie Folien, erzeugte Personalisierung nicht beschädigt werden.

Ist in der zeichnerischen Darstellung die Laufsohle 102 nur bereichsweise mit einer Personalisierung versehen, so kann sich eine solche selbstverständlich auch über die gesamte Innenfläche 104 der Laufsohle 102 erstrecken.

## Patentansprüche

1. Verfahren zum Herstellen einer transparenten Laufsohle (102) im Spritz- oder Gießverfahren, wobei Kunststoff in eine von zumindest einen ersten Werkzeugteil (10), wie Oberstempel oder Verdränger, und einem zweiten Werkzeugteil (20), wie Unterstempel oder Bodenstempel, begrenzte Kavität (18) eingebracht wird, wobei das erste Werkzeugteil (10) in seiner die Kavität (18) begrenzenden Fläche (16) mit zumindest einer Unterdruckquelle verbindbare Saugöffnungen aufweist, dass ausschließlich auf der Fläche oder auf einen Teilbereich der Fläche ein eine Individualisierung bietendes Flachmaterial (56, 106, 108) gelegt und über mit Unterdruck beaufschlagte Saugöffnungen fixiert wird und dass anschließend die Laufsohle (102) in einem das erste und zweite Werkzeugteil (10, 20) umfassenden Spritz- oder Gießwerkzeug hergestellt wird, wobei das Flachmaterial auf der zu der Außenfläche der Laufsohle fernliegenden Fläche der hergestellten Laufsohle aufgebracht ist.

2. Verfahren nach Anspruch 1,
**dadurch gekennzeichnet,**
**dass** als das Flachmaterial (56, 106, 108) eine Kunststofffolie oder ein flächiges Textilgewebe verwendet wird.

3. Verfahren nach Anspruch 1 oder 2,
**dadurch gekennzeichnet,**
**dass** das Flachmaterial eine Flächenerstreckung derart aufweist, dass ausschließlich ein Teilbereich der die Kavität (18) begrenzenden Fläche (16) des ersten Werkzeugteils (10) abgedeckt wird.

4. Spritz- oder Gießwerkzeug bestimmt zur Herstellung einer transparenten Laufsohle (102) nach zumindest Anspruch 1, umfassend ein erstes Werkzeugteil (10), wie Oberstempel oder Verdränger, und ein zweites Werkzeugteil (20), wie Unter- oder Bodenstempel, die relativ zueinander verstellbar sind und eine Kavität (18) begrenzen, wobei das erste Werkzeugteil (10) zumindest zwei miteinander verbundene Teile (12, 14) aufweist, wobei ein kavitätsfernliegendes Teil (12) zumindest einen mit zumindest einer Unterdruckquelle verbindbaren Kanal (34, 36, 38) oder eine Nut aufweist, der oder die mit in mehrere Saugöffnungen (22, 24, 26, 28, 30, 32) mündenden Durchgangsöffnungen des anderen Teils (14) verbunden ist bzw. in diese übergeht, dass die mehreren Saugöffnungen in die Kavität (18) begrenzender Fläche (16) des ersten Werkzeugteils (10) münden, und dass zumindest einige der mit der zumindest einen Unterdruckquelle verbundenen Saugöffnungen von einem eine Individualisierung bietenden Flachmaterial (56, 106, 108) abgedeckt sind, wobei das Spritz- oder Gießwerkzeug derart ausgebildet ist, dass nach dem Fixieren des Flachmaterials mittels mit Unterdruck beaufschlagter Saugöffnungen das zur Herstellung der Laufsohle benutzte Material in den Unterstempel (62) gefüllt wird.

5. Spritz- oder Gießwerkzeug nach Anspruch 4,
**dadurch gekennzeichnet,**
**dass** in dem kavitätsfernen Teil (12) mehrere Kanäle (34, 36, 38) oder Nuten ausgebildet sind, die unabhängig voneinander mit Unterdruck beaufschlagbar sind.

6. Spritz- oder Gießwerkzeug nach Anspruch 4 oder 5,
**dadurch gekennzeichnet,**
**dass** die Saugöffnungen in Gruppen unterteilt sind, die unabhängig voneinander mit der Unterdruckquelle verbindbar sind.

7. Spritz- oder Gießwerkzeug nach zumindest einem der Ansprüche 4 bis 6,
**dadurch gekennzeichnet,**
**dass** eine erste Gruppe von ersten Saugöffnungen (22, 24) auf einer ersten Linie (52) angeordnet ist, die umlaufend beabstandet zum Rand der Fläche verlaufen.

8. Spritz- oder Gießwerkzeug nach Anspruch 7,
**dadurch gekennzeichnet,**
**dass** eine zweite Gruppe von zweiten Saugöffnungen (26, 28) entlang einer zweiten Linie (54) angeordnet ist, die umlaufend beabstandet zum Rand und innerhalb der ersten Linie (52) verlaufen.

9. Spritz- oder Gießwerkzeug nach Anspruch 7,
**dadurch gekennzeichnet,**
**dass** Abstand von aufeinanderfolgenden ersten Saugöffnungen (22, 24) geringer als Abstand von aufeinanderfolgenden zweiten Saugöffnungen (26, 28) ist.

10. Spritz- oder Gießwerkzeug nach zumindest Anspruch 7 oder 8,
**dadurch gekennzeichnet,**
**dass** ein Durchmesser D1 der ersten Saugöffnung (22, 24) kleiner als ein Durchmesser D2 der zweiten Sauföffnung (26, 28) ist, insbesondere 5 D1 ≤ D2 ≤ 15 D1.

11. Spritz- oder Gießwerkzeug nach zumindest einem der Ansprüche 4 bis 10,
**dadurch gekennzeichnet,**
**dass** in einer den herzustellenden Fersenbereich der Laufsohle (102) begrenzenden Fläche des ersten Werkzeugteils (10) eine dritte Gruppe von dritten Saugöffnungen (30, 32) angeordnet ist, die vorzugsweise im Mittenbereich des herzustellenden Fersenbereichs der Laufsohle verlaufen.

12. Spritz- oder Gießwerkzeug nach zumindest einem der Ansprüche 4 bis 11,
**dadurch gekennzeichnet,**
**dass** die Saugöffnungen kavitätsseitig jeweils ein Filter aufweisen oder ein solches in diese eingesetzt ist.

## Claims

1. A method for producing a transparent outsole (102) by injection moulding or casting, wherein plastics material is introduced into a cavity (18) defined by at least one first tool part (10), such as a top punch or displacer, and a second tool part (20), such as a bottom or lower punch,
wherein the first tool part (10) has, in its face (16) which defines the cavity (18), suction openings which are connectable to at least one negative-pressure source, in that a flat material (56, 106, 108) offering individualisation or personalisation is placed only on the face or a sub-region of the face and is fixed in place via suction openings supplied with negative pressure and in that the outsole (102) is then produced in an injection moulding or casting tool comprising the first and second tool parts (10, 20), wherein the flat material is applied to the face of the produced outsole which is remote from the outer face of the outsole.

2. The method according to claim 1,
**characterised in that**
a plastics film or a planar woven textile is used as the flat material (56, 106, 108).

3. The method according to claim 1 or 2,
**characterised in that**
the areal extent of the flat material is such that exclusively a sub-region of the face (16), which defines the cavity (18) of the first tool part (10), is covered.

4. An injection moulding or casting tool intended for producing a transparent outsole (102) according to at least claim 1, comprising a first tool part (10), such as a top punch or displacer, and a second tool part (20), such as a bottom or lower punch, which are displaceable relative to one another and define a cavity (18),
wherein the first tool part (10) has at least two interconnected parts (12, 14), wherein a part (12) remote from the cavity has at least one channel (34, 36, 38) or a groove connectable to at least one negative-pressure source, which channel or groove is connected to or transitions into the passage openings of the other part (14) which open into a plurality of suction openings (22, 24, 26, 28, 30, 32), the plurality of suction openings open into the face (16), which defines the cavity (18), of the first tool part (10), and at least some of the suction openings connected to at least one negative-pressure source are covered by a flat material (56, 106, 108) offering individualisation or personalisation, wherein the injection moulding or casting tool is designed in such a way that after the flat material is fixed in place by the suction openings to which negative pressure is supplied, the material used to manufacture the outsole fills the lower punch (62).

5. The injection moulding or casting tool according to claim 4,
**characterised in that**
a plurality of channels (34, 36, 38) or grooves are constructed in the part (12) remote from the cavity, which channels or grooves may be mutually independently supplied with negative pressure.

6. The injection moulding or casting tool according to claim 4 or 5,
**characterised in that**
the suction openings are subdivided into groups which are mutually independently connectable to the negative-pressure source.

7. The injection moulding or casting tool according to at least one of claims 4 to 6,
**characterised in that**
a first group of first suction openings (22, 24) is arranged on a first line (52), which suction openings extend around and spaced from the edge of the face.

8. The injection moulding or casting tool according to claim 7,
**characterised in that**
a second group of second suction openings (26, 28) is arranged along a second line (54), which suction openings extend around and spaced from the edge and inside the first line (52).

9. The injection moulding or casting tool according to claim 7,
**characterised in that**
the spacing between successive first suction openings (22, 24) is smaller than the spacing between successive second suction openings (26, 28).

10. The injection moulding or casting tool according to at least claim 7 or 8,
**characterised in that**
a diameter D1 of the first suction opening (22, 24) is smaller than a diameter D2 of the second suction opening (26, 28), in particular 5 D1 ≤ D2 ≤ 15 D1.

11. The injection moulding or casting tool according to at least one of claims 4 to 10,
**characterised in that**
a third group of third suction openings (30, 32) is arranged in a face of the first tool part (10) which defines the heel region to be produced of the outsole (102), which preferably extend in the central region of the heel region to be produced of the outsole.

12. The injection moulding or casting tool according to at least one of claims 4 to 11,
**characterised in that**
the suction openings in each case have a filter at the cavity end or have a filter inserted therein.

## Revendications

1. Procédé de fabrication d'une semelle transparente (102) dans un procédé d'injection ou de coulée, sachant que du plastique est placé dans une cavité (18) délimitée par au moins une première partie de moule (10), telle que poinçon supérieur ou refouleur, et une deuxième partie de moule (20), telle que poinçon inférieur ou poinçon de fond, sachant que la première partie de moule (10) présente des orifices d'aspiration connectables à au moins une source de dépression, dans sa surface (16) délimitant la cavité (18), qu'un matériau plat (56, 106, 108) offrant une personnalisation est placé exclusivement sur la surface ou une zone partielle de la surface et est fixé via des orifices d'aspiration alimentés en dépression et qu'ensuite, la semelle (102) est fabriquée dans un moule d'injection ou de coulée comprenant la première et la seconde parties de moule (10, 20), sachant que le matériau plat est appliqué sur la surface de la semelle fabriquée, éloignée de la surface extérieure de la semelle.

2. Procédé selon la revendication 1,
**caractérisé en ce**
**qu'**est utilisé comme matériau plat (56, 106, 108) un film plastique ou un tissu textile plat.

3. Procédé selon la revendication 1 ou 2,
**caractérisé en ce**
**que** le matériau plat présente une étendue surfacique de sorte qu'exclusivement, une zone partielle de la surface (16) délimitant la cavité (18), de la première partie de moule (10) est recouverte.

4. Moule d'injection ou de coulée destiné à fabriquer une semelle transparente (102) selon au moins la revendication 1, comprenant une première partie de moule (10), telle que poinçon supérieur ou refouleur, et une deuxième partie de moule (20), telle que poinçon inférieur ou poinçon de fond, qui sont déplaçables relativement l'une par rapport à l'autre et délimitent une cavité (18),
sachant que la première partie de moule (10) présente au moins deux parties (12, 14) reliées ensemble, sachant qu'une partie (12) éloignée de la cavité présente au moins un canal (34, 36, 38) connectable à au moins une source de dépression ou une rainure qui est relié(e) à des orifices de traversée, de l'autre partie (14), débouchant dans une pluralité d'orifices d'aspiration (22, 24, 26, 28, 30, 32) ou se prolonge dans ceux-ci, que la pluralité d'orifices d'aspiration débouche dans la surface (16) délimitant la cavité (18), de la première partie de moule (10), et qu'au moins certains orifices d'aspiration connectés avec ladite au moins une source de dépression sont recouverts par un matériau plat (56, 106, 108) offrant une personnalisation, sachant que le moule d'injection ou de coulée est conçu de telle sorte qu'après la fixation du matériau plat au moyen des orifices d'aspiration alimentés en dépression, le matériau utilisé pour fabriquer la semelle est rempli dans le poinçon inférieur (62).

5. Moule d'injection ou de coulée selon la revendication 4,
**caractérisé en ce**
**que** sont constitués, dans la partie éloignée de la cavité (12), plusieurs canaux (34, 36, 38) ou rainures qui sont alimentables en dépression indépendamment les uns des autres.

6. Moule d'injection ou de coulée selon la revendication 4 ou 5,
**caractérisé en ce**
**que** les orifices d'aspiration sont divisés en groupes qui sont connectables à la source de dépression indépendamment les uns des autres.

7. Moule d'injection ou de coulée selon au moins l'une des revendications 4 à 6,
**caractérisé en ce**
**qu'**un premier groupe de premiers orifices d'aspiration (22, 24) est disposé sur une première ligne (52) qui est écartée du bord de la surface et s'étend sur tout le pourtour.

8. Moule d'injection ou de coulée selon la revendication 7,
**caractérisé en ce**
**qu'**un second groupe de seconds orifices d'aspiration (26, 28) est disposé sur une deuxième ligne (54) qui est écartée du bord et à l'intérieur de la première ligne (52) et s'étend sur tout le pourtour.

9. Moule d'injection ou de coulée selon la revendication 7,
**caractérisé en ce**
**que** l'écart entre les premiers orifices d'aspiration (22, 24) consécutifs est inférieur à l'écart des seconds orifices d'aspiration (26, 28) consécutifs.

10. Moule d'injection ou de coulée selon au moins la revendication 7 ou 8,
**caractérisé en ce**
**qu'**un diamètre D1 du premier orifice d'aspiration (22, 24) est inférieur à un diamètre D2 du second orifice d'aspiration (26, 28), notamment 5 D1 ≤ D2 ≤ 15 D1.

11. Moule d'injection ou de coulée selon l'une des revendications 4 à 10,
**caractérisé en ce**
**qu'**est disposé, dans une surface de la première partie de moule (10), délimitant la zone du talon à fabriquer de la semelle (102), un troisième groupe de troisièmes orifices d'aspiration (30, 32) qui s'étendent de préférence dans la zone centrale de la zone du talon à fabriquer de la semelle.

12. Moule d'injection ou de coulée selon l'une des revendications 4 à 11,
**caractérisé en ce**
**que** les orifices d'aspiration présentent chacun un filtre côté cavité ou qu'un tel est placé dans ceux-ci.
